(19) Europäisches Patentamt
European Patent Office
Office européen des brevets

(11) **EP 4 617 717 A1**

(12) **DEMANDE DE BREVET EUROPEEN**

(43) Date de publication:
**17.09.2025 Bulletin 2025/38**

(21) Numéro de dépôt: **25163567.8**

(22) Date de dépôt: **13.03.2025**

(51) Classification Internationale des Brevets (IPC):
**G01S 7/4863** [(2020.01)]     **G01S 17/894** [(2020.01)]
**G01S 7/481** [(2006.01)]     **G01S 7/4914** [(2020.01)]
**G01S 17/36** [(2006.01)]     **G01S 7/4915** [(2020.01)]

(52) Classification Coopérative des Brevets (CPC):
**G01S 7/4914; G01S 7/4816; G01S 7/4863;
G01S 7/4915; G01S 17/36; G01S 17/894**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **15.03.2024  FR 2402637**

(71) Demandeur: **Commissariat à l'Energie Atomique
et aux Energies
Alternatives
75015 Paris (FR)**

(72) Inventeur: **AYEL, François
38054 GRENOBLE Cedex 09 (FR)**

(74) Mandataire: **Brevalex
Tour Trinity
1 B Place de la Défense
92400 Courbevoie (FR)**

(54) **PIXEL DE PROFONDEUR A CAPACITE D'INTEGRATION COMMUTABLE**

(57)     Dispositif d'acquisition d'images doté d'un ensemble de pixels de profondeur, chaque pixel de profondeur comprenant un circuit de lecture associé à un photo-détecteur (PD), le circuit de lecture étant doté d'un circuit de commutation (120) configuré pour :
- adopter une première configuration de sorte à coupler une première électrode (101a) d'une la capacité d'intégration (Ca) à un premier nœud de lecture ($N_{L_1}$) et une deuxième électrode (102a) de la capacité d'intégration (Ca) à un nœud de détection ($N_D$), puis,
- adopter une deuxième configuration de sorte à coupler la première électrode (101a) de la capacité d'intégration (Ca) au nœud de détection ($N_D$) et la deuxième électrode (102a) de la capacité d'intégration ($C_{INT1}$) au nœud de lecture ($N_L$).

FIG. 6B

EP 4 617 717 A1

**EP 4 617 717 A1**

**Description**

**DOMAINE TECHNIQUE**

La présente demande concerne le domaine des circuits de lecture pour dispositifs d'acquisition d'image de profondeur d'une scène et plus particulièrement ceux associés à des photodiodes non pincées.

**ART ANTERIEUR**

Des systèmes d'acquisition d'images aptes à acquérir des informations de profondeur, par exemple tels que systèmes utilisant les détecteurs de temps de vol indirects (iTOF pour indirect « Time Of Flight ») sont connus.

Un système iTOF comprend généralement un circuit qui pilote une source lumineuse, par exemple une diode électroluminescente (LED), laquelle émet un signal lumineux à une longueur d'onde, par exemple dans le spectre du proche infrarouge, vers une scène. La lumière d'un signal lumineux réfléchi à partir de cette scène est captée par un dispositif d'acquisition d'image. Le dispositif d'acquisition d'image comprend également des pixels aptes à recevoir le signal lumineux réfléchi par la scène image et à détecter la phase du signal reçu pour former une image de profondeur. Ces pixels sont appelés ci-après « pixels de profondeur ». Une série d'acquisitions avec un certain déphasage par rapport à la lumière émise et l'amplitude lumineuse reçue à chaque instant est stockée dans des éléments de mémorisation dédiés.

Un système numérique détermine, sur la base de signaux modulés en amplitude de façon périodique et captés par les pixels de profondeur du dispositif d'acquisition d'image, les distances correspondantes des objets dans la scène image.

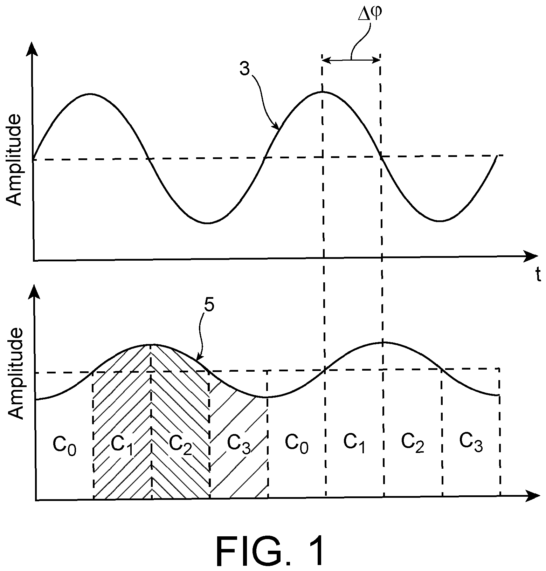

La figure 1 est un graphique représentant, par une courbe 3, un exemple d'évolution, en fonction du temps, de l'intensité lumineuse d'un signal lumineux émis par une diode électroluminescente vers une scène image, et, par une courbe 5, un exemple d'évolution, en fonction du temps, d'une intensité lumineuse d'un signal lumineux reçu par l'un des pixels de profondeur d'un dispositif d'acquisition d'image.

Les pixels de profondeur sont basés sur des photo-détecteurs utilisés pour détecter la phase du signal lumineux reçu.

Il y a un déphasage $\Delta\varphi$ entre le signal lumineux émis et le signal lumineux reçu, qui représente le temps de vol du signal lumineux en provenance de la diode électroluminescente vers le dispositif d'acquisition d'image par l'intermédiaire d'un objet de la scène image qui réfléchit le signal lumineux.

Une estimation de la distance d à l'objet dans la scène image peut être calculée en utilisant l'équation :

$$d = \frac{c}{2f}.\frac{\Delta\varphi}{2\pi}$$

où c désigne la vitesse de la lumière, f la fréquence du signal lumineux.

Le déphasage $\Delta\varphi$ peut être estimé sur la base d'un échantillonnage du signal capté par un ou plusieurs pixels de profondeur pendant au moins trois fenêtres également appelées phases d'échantillonnage distinctes, de préférence pendant quatre fenêtres ou phases d'échantillonnage distinctes, lors de chaque période du signal lumineux.

Une intégration sur un grand nombre de périodes en particulier supérieur à 10000 est typiquement réalisée. Chaque fenêtre ou phase d'échantillonnage a par exemple une durée allant jusqu'à un quart de la période du signal lumineux. Ces phases d'échantillonnage ont typiquement chacune une même durée et les quatre phases d'échantillonnage ont un temps de cycle total égal à la période du signal lumineux.

Les échantillons de charges sont mémorisés dans des éléments de mémorisation, par exemple sous forme de capacités.

En se basant sur des échantillons EC0, EC1, EC2 intégrés du signal lumineux, et pour une onde lumineuse sinusoïdale, le déphasage $\Delta\varphi$ du signal lumineux peut, dans un cas particulier d'utilisation de 3 éléments de mémorisation, peut être donné par la formule suivante :

$$\Delta\varphi = \arctan\sqrt{3}(EC2\text{-}EC1)/[(EC0\text{-}EC1)+(EC0\text{-}EC2)].$$

Une technique basée sur la détection de quatre échantillons EC0, EC1, EC2, et EC3 selon quatre phases C0, C1, C2, et C3 par période est décrite plus en détail dans la publication de R. Lange et de P. Seitz intitulée "Solid-state TOF range camera", IEEE J. on Quantum Electronics, vol. 37, No.3, March 2001.

Il est ainsi possible d'organiser différemment la détection en utilisant 4 éléments de mémorisation. Dans ce cas, le déphasage est donné par la formule suivante :

$$\Delta\varphi=\arctan\left[(EC3-EC1)/(EC0-EC2)\right].$$

Pour déterminer le déphasage $\Delta\varphi$ entre le signal lumineux émis et le signal lumineux reçu, le signal lumineux reçu est échantillonné en transférant, successivement et à intervalle régulier, des charges photo-générées dans un photo-détecteur pendant une première phase d'échantillonnage C0, des charges photo-générées dans le même photodétecteur ou dans un autre photodétecteur pendant une deuxième phase d'échantillonnage C1 suivant la première phase, des charges photo-générées pendant une troisième phase d'échantillonnage C2 suivant la deuxième phase, et des charges photo-générées pendant une quatrième fenêtre d'échantillonnage C3 suivant la troisième phase. Cette séquence de quatre phases échantillonnages est répétée un nombre important de fois, par exemple 100000 fois pendant une période dite « d'intégration » avant que les signaux obtenus soient lus par un circuit de sortie.

Lorsqu'une photodiode est pincée et dispose d'une zone complétement déplétée et dépourvue de charge, cette zone se présente comme un puit de potentiel qui permet de conserver un certain nombre de charges, typiquement entre plusieurs dizaines et plusieurs milliers suivant les caractéristiques de la diode en attendant leur transfert effectué par le biais de grilles de transfert.

Des pixels de profondeur à photodiode pincées et comportant des grilles de transfert et plusieurs éléments de mémorisation par pixel sont connus.

L'utilisation de diodes pincées pour un pixel de profondeur est souhaitée mais n'est pas toujours possible.

Par exemple, dans le cas d'un matériau III-V tel que l'InGaAs, particulièrement adapté à l'infrarouge et donc aux longueurs d'ondes couramment utilisées pour les mesures iTOF, la mise en œuvre d'une photodiode pincée est difficile.

Or, le maintien de la polarisation d'une photodiode est d'autant plus critique que la photodiode est de type non-pincée. Cette polarisation doit de préférence être maintenue constante en valeur voulue, afin de conserver de bonnes performances en termes de gain et de minimiser le courant d'obscurité.

Pour polariser de manière appropriée et permettre de maintenir une polarisation fixe sur le photo-détecteur, une structure de type cascode peut être envisagée dans le circuit de lecture. Une telle structure est typiquement formée d'un transistor dont la source est reliée au photo-détecteur. Elle est cependant inadaptée pour certaines applications, en particulier celles nécessitant des fréquences de fonctionnement élevées, par exemple supérieures à 100 MHz. Des circuits de lecture à cascode actifs sont connus, mais leur bande passante reste limitée et il reste difficile d'obtenir un bon compromis entre consommation et précision de détection avec de tels circuits. D'autres structures participant au maintien de la polarisation sont connues.

La demande de brevet français n°2208374 déposée 18/08/2022 auprès de l'Institut National de la Propriété Industrielle (INPI) prévoit un circuit de lecture répondant à une telle problématique.

On cherche à améliorer un tel circuit de lecture, notamment en termes de dynamique de courant et/ou de rapport signal sur bruit et/ou pour permettre une simplification des traitement numériques nécessaires en aval.

## EXPOSÉ DE L'INVENTION

La présente invention prévoit, selon un aspect, un dispositif d'acquisition d'images de profondeur d'une scène par détection d'un signal lumineux réfléchi correspondant à la réflexion sur la scène d'un signal lumineux incident, en particulier dans le proche infrarouge, le dispositif d'acquisition étant doté d'un ensemble de pixels de profondeur, chaque pixel de profondeur de l'ensemble comprenant un circuit de lecture associé à un photo-détecteur, le circuit de lecture comportant un nœud de détection auquel le photo-détecteur est connecté, le circuit de lecture étant doté :

- d'un élément de mémorisation comportant une capacité d'intégration configurée pour acquérir des échantillons de charges issues du photo-détecteur lors de phases d'échantillonnage effectuées au cours d'une période d'intégration comportant des séquences répétées de phases successives d'échantillonnage de charges,
- d'au moins un étage amplificateur comportant en entrée, le nœud de détection couplé au photo-détecteur et en sortie, un nœud de lecture apte à être couplé à un dispositif de lecture externe et commun à l'ensemble de pixels de profondeurs,

au moins un premier pixel dudit ensemble de pixels de profondeur étant doté en outre d'un circuit de commutation comportant des éléments interrupteurs et configuré pour :
- lors de phases d'échantillonnage de la capacité d'intégration du premier pixel adopter une première configuration de sorte à coupler une première électrode de la capacité d'intégration au premier nœud de lecture et une deuxième électrode de la capacité d'intégration au nœud de détection, puis,
- lors d'autres phases d'échantillonnage de la capacité d'intégration du premier pixel adopter une deuxième configuration de sorte à coupler la première électrode de la capacité d'intégration au nœud de détection et la deuxième électrode de la capacité d'intégration au nœud de lecture,
ou

- lors de phases d'échantillonnage de la capacité adopter une première configuration de sorte à coupler une première électrode de la capacité d'intégration au nœud de lecture et une deuxième électrode de la capacité d'intégration au nœud de détection, puis,
- lors d'autres phases d'échantillonnage de la capacité adopter une deuxième configuration de sorte à coupler la première électrode de la capacité d'intégration au nœud de détection et la deuxième électrode de la capacité d'intégration à un deuxième nœud de lecture en sortie d'un deuxième étage amplificateur du circuit de lecture, le deuxième étage amplificateur comportant en entrée, le nœud de détection et en sortie le deuxième nœud de lecture, le deuxième nœud de lecture étant également apte à être couplé au dispositif de lecture externe.

Ainsi, on réalise soit un retournement de capacité dans une branche d'amplification, soit un échange de capacités entre branches d'amplification pour, dans le deux cas gagner en rapport signal sur bruit.

Selon un mode de réalisation préféré, le photo-détecteur est une photodiode non-pincée. Cette photodiode non-pincée peut être en particulier à base d'un matériau III-V. Ce matériau III-V peut être avantageusement de l'InGaAs.

Selon un premier mode de réalisation, la capacité d'intégration est une première capacité d'intégration et l'étage amplificateur est un premier étage amplificateur, le circuit de lecture comprenant en outre :

- une deuxième capacité d'intégration,
- un deuxième étage amplificateur, le deuxième étage amplificateur comportant en entrée, le nœud de détection couplé au photodétecteur et en sortie, le deuxième nœud de lecture.

Dans ce cas, avantageusement, dans la première configuration, la première électrode de la première capacité d'intégration peut être couplée au premier nœud de lecture et la deuxième électrode de la capacité d'intégration couplée au nœud de détection, et dans la deuxième configuration la première électrode de la première capacité d'intégration peut être couplée au nœud de détection et la deuxième électrode de la première capacité d'intégration est couplée au premier nœud de lecture,
le circuit de commutation étant configuré pour :

- lors de phases d'échantillonnage de la deuxième capacité d'intégration coupler une première électrode de la deuxième capacité d'intégration au deuxième nœud de lecture et une deuxième électrode de la deuxième capacité d'intégration au nœud de détection, puis
- lors d'autres phases d'échantillonnage de la deuxième capacité d'intégration, coupler la première électrode de la deuxième capacité d'intégration au nœud de détection et la deuxième électrode de la deuxième capacité d'intégration au deuxième nœud de lecture.

Avantageusement, les séquences répétées de phases successives d'échantillonnage comportent une répétition d'une première séquence d'échantillonnage suivie d'une répétition d'une deuxième séquence d'échantillonnage, chacune des première séquence et deuxième séquence comportant une première phase d'échantillonnage, une deuxième phase d'échantillonnage, une troisième phase d'échantillonnage, et une quatrième phase d'échantillonnage, la première phase d'échantillonnage de la première séquence et la troisième phase d'échantillonnage de la première séquence étant effectuées respectivement, par la première capacité d'intégration du premier pixel et par la deuxième capacité d'intégration du premier pixel, la première phase d'échantillonnage de la deuxième séquence et la troisième phase d'échantillonnage de la deuxième séquence étant effectuées respectivement par la première capacité d'intégration du premier pixel et par la deuxième capacité d'intégration du premier pixel, la deuxième phase d'échantillonnage et la quatrième phase d'échantillonnage de la première séquence et de la deuxième séquence étant effectuées par au moins un circuit de lecture d'au moins un autre pixel de profondeur dudit ensemble.

Selon un deuxième mode de réalisation, le circuit de lecture est doté d'une unique capacité d'intégration et les phases d'échantillonnage sont des phases d'échantillonnage de cette unique capacité d'intégration pendant lesquelles la première électrode de cette capacité d'intégration est couplée au nœud de lecture et la deuxième électrode de cette capacité d'intégration est couplée au nœud de détection, les autres phases d'échantillonnage étant des phases d'échantillonnage pendant lesquelles la première électrode de la capacité d'intégration est couplée au nœud de détection et la deuxième électrode de la capacité d'intégration est couplée au nœud de lecture.

Avantageusement, selon un aspect particulier de ce deuxième mode de réalisation, les séquences répétées de phases successives d'échantillonnage peuvent comporter une répétition d'une première séquence d'échantillonnage puis une répétition d'une deuxième séquence d'échantillonnage, la première séquence d'échantillonnage et la deuxième séquence d'échantillonnage comportant chacune une succession d'une première phase d'échantillonnage, d'une deuxième phase d'échantillonnage, d'une troisième phase d'échantillonnage, et d'une quatrième phase d'échantillonnage, la première phase d'échantillonnage, la deuxième phase d'échantillonnage, troisième phase d'échantillonnage, la quatrième phase d'échantillonnage ayant des durées égales, la première phase d'échantillonnage et la deuxième phase d'échantillonnage de la première séquence étant effectuées par le premier pixel dans la première configuration du circuit de commutation, la troisième phase d'échantillonnage et la quatrième phase d'échantillonnage de la deuxième séquence étant effectuées par le premier pixel dans la première configuration du circuit de commutation, la troisième phase d'échantillonnage et la quatrième phase d'échantillonnage de la première séquence, la première phase d'échantillonnage et la deuxième phase d'échantillonnage de la deuxième étant effectuées par au moins un circuit de lecture d'au moins un autre pixel de profondeur dudit ensemble.

En variante, les séquences répétées de phases successives d'échantillonnage peuvent comporter une répétition d'une première séquence d'échantillonnage puis une répétition d'une deuxième séquence d'échantillonnage, la première séquence d'échantillonnage et la deuxième séquence d'échantillonnage comportant chacune une succession d'une première phase d'échantillonnage, d'une deuxième phase d'échantillonnage, d'une troisième phase d'échantillonnage, et d'une quatrième phase d'échantillonnage, la première phase d'échantillonnage, la deuxième phase d'échantillonnage, la troisième phase d'échantillonnage, la quatrième phase d'échantillonnage ayant des durées égales,

la première phase d'échantillonnage de la première séquence étant effectuée par le premier pixel,
la troisième phase d'échantillonnage de la deuxième séquence étant effectuée par le premier pixel,
la deuxième phase d'échantillonnage, la troisième phase d'échantillonnage et la quatrième phase d'échantillonnage de la première séquence, la première phase d'échantillonnage, la deuxième phase d'échantillonnage et la quatrième phase d'échantillonnage de la deuxième séquence étant effectuées par au moins un circuit de lecture d'au moins un autre pixel de profondeur dudit ensemble.

Avantageusement, le circuit de lecture du premier pixel comprend en outre un bloc de réinitialisation de polarisation servant à la polarisation du photo-détecteur, avec un interrupteur de repolarisation configuré pour, lors de phases de réinitialisation de polarisation dudit photo-détecteur, coupler le bloc de réinitialisation de polarisation au photo-détecteur de sorte à lui appliquer un potentiel de polarisation, et pour lors des phases d'échantillonnage effectuées par le premier pixel, découpler le photo-détecteur du bloc de réinitialisation de polarisation.

Avantageusement, le circuit de commutation peut comprendre :

- un premier élément interrupteur entre une première électrode de la capacité d'intégration et le nœud de lecture;
- un deuxième élément interrupteur entre une deuxième électrode de la capacité d'intégration et le nœud de détection ;
- un troisième élément interrupteur entre la deuxième électrode de la capacité d'intégration et le nœud de détection ;
- un quatrième élément interrupteur entre la première électrode de la première capacité et le nœud de lecture.

Selon un troisième mode de réalisation, la capacité d'intégration est une première capacité d'intégration et l'étage amplificateur est un premier étage amplificateur, le circuit de lecture comprenant en outre :

- une deuxième capacité d'intégration,
- un deuxième étage amplificateur, le deuxième étage amplificateur comportant en entrée, le nœud de détection couplé au photodétecteur et en sortie, le deuxième nœud de lecture, pendant les phases d'échantillonnage, la première électrode de la première capacité d'intégration étant couplée au premier nœud de lecture et la deuxième électrode de la première capacité d'intégration est couplée au nœud de détection, et pendant les autres phases d'échantillonnage, la première électrode de la première capacité d'intégration étant couplée au nœud de détection et la deuxième électrode de la première capacité d'intégration au nœud premier de lecture,

le circuit de commutation étant configuré pour :

- lors de phases d'échantillonnage de la deuxième capacité d'intégration coupler une première électrode de la deuxième capacité d'intégration au deuxième nœud de lecture et une deuxième électrode de la deuxième capacité d'intégration au nœud de détection, puis
- lors d'autres phases d'échantillonnage de la deuxième capacité d'intégration, coupler la première électrode de la deuxième capacité d'intégration au nœud de détection et la deuxième électrode de la deuxième capacité d'intégration au deuxième nœud de lecture.

Avantageusement, les séquences répétées de phases successives d'échantillonnage comportent une première séquence d'échantillonnage puis une deuxième séquence d'échantillonnage, la première séquence d'échantillonnage et la deuxième séquence d'échantillonnage comportant chacune une succession d'une première phase d'échantillonnage, d'une deuxième phase d'échantillonnage, d'une troisième phase d'échantillonnage, et d'une quatrième phase d'échantillonnage, la première phase d'échantillonnage, la deuxième phase d'échantillonnage, la troisième phase d'échantillonnage, la quatrième phase d'échantillonnage ayant des durées égales,

la première phase d'échantillonnage et la deuxième phase d'échantillonnage de la première séquence étant effectuées par la capacité du premier pixel, la troisième phase d'échantillonnage et la quatrième phase d'échantillonnage de la première séquence étant effectuées par la deuxième capacité du premier pixel.

Selon une réalisation particulière, la deuxième phase d'échantillonnage et la troisième phase d'échantillonnage de la première séquence peuvent être effectuées par la capacité du deuxième pixel, la quatrième phase d'échantillonnage et la première phase d'échantillonnage de la deuxième séquence étant effectuées par la deuxième capacité du deuxième pixel.

Le circuit de commutation peut comporter:

- un élément interrupteur entre la première électrode de la première capacité et le premier nœud de lecture;
- un élément interrupteur entre la deuxième électrode de la première capacité et le nœud de détection;
- un élément interrupteur entre la première électrode de la deuxième capacité et le premier nœud de lecture;
- un élément interrupteur entre la deuxième électrode de la deuxième capacité et le nœud de détection ;
- un élément interrupteur entre la première électrode de la première capacité et le nœud de détection;
- un élément interrupteur entre la deuxième électrode de la première capacité et le deuxième nœud de lecture;
- un élément interrupteur entre la première électrode de la deuxième capacité et le nœud de détection;
- un élément interrupteur entre la deuxième électrode de la deuxième capacité et le premier nœud de lecture.

Avantageusement, l'étage amplificateur est formé :

- d'un premier transistor doté d'une grille connectée au photodétecteur et d'une électrode, en particulier une électrode de drain, connectée au nœud de lecture
- d'un deuxième transistor monté en source de courant et ayant une électrode commune avec le premier transistor.

Les pixels de profondeur peuvent avoir un agencement matriciel, le dispositif comprenant en outre un bloc de polarisation externe commun aux pixels de profondeur d'une même rangée, en particulier une rangée horizontale ou une ligne de pixels de profondeur, le bloc de polarisation externe comprenant une portion de circuit montée en miroir de courant avec ledit deuxième transistor.

Avantageusement, le circuit de lecture peut être muni en outre d'un interrupteur de réinitialisation en parallèle avec la branche de rétroaction, prévu pour, lorsqu'il est fermé, réinitialiser la capacité d'intégration préalablement à la période d'intégration, ledit interrupteur de réinitialisation étant ouvert lors de la période d'intégration.

## BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :

La figure 1 sert, par l'intermédiaire d'exemples de signaux respectivement émis et reçus, à illustrer une séquence de plusieurs phases d'échantillonnage mises en œuvre de manière répétée au sein d'un système iTOF au cours d'une période d'intégration.

La figure 2 illustre un premier circuit de lecture suivant l'invention d'un pixel de profondeur doté de capacités d'intégration avec un circuit de commutation permettant de faire commuter, d'une phase à l'autre, les connexions de chacune de ses capacités d'intégration.

La figure 3 illustre un mode de fonctionnement du premier circuit lors de phases d'échantillonnage successives.

La figure 4 illustre un autre mode de fonctionnement d'un dispositif d'acquisition d'images de profondeur lors duquel, au cours d'une période d'intégration, deux pixels de profondeur réalisent concomitamment des phases d'échantillonnage tandis que d'autres phases d'échantillonnage sont réalisées exclusivement par le premier pixel ou par le deuxième pixel.

Les figures 5A et 5B illustrent différentes configurations du circuit de commutation d'un deuxième circuit de lecture suivant l'invention d'un pixel de profondeur et dans lequel on peut cette fois faire permuter les étages d'amplification auxquelles les capacités d'intégration sont associées.

Les figures 6A et 6B illustrent un troisième circuit de lecture suivant l'invention d'un pixel de profondeur doté d'un unique élément de mémorisation et d'un circuit de commutation permettant de faire commuter les électrodes de sa capacité d'intégration par rapport à l'étage d'amplification auquel cette capacité est associée.

La figure 7 illustre un premier mode de fonctionnement du troisième circuit lors de séquences d'échantillonnage successives.

La figure 8 illustre un deuxième mode de fonctionnement du troisième circuit lors de séquences d'échantillonnage successives.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

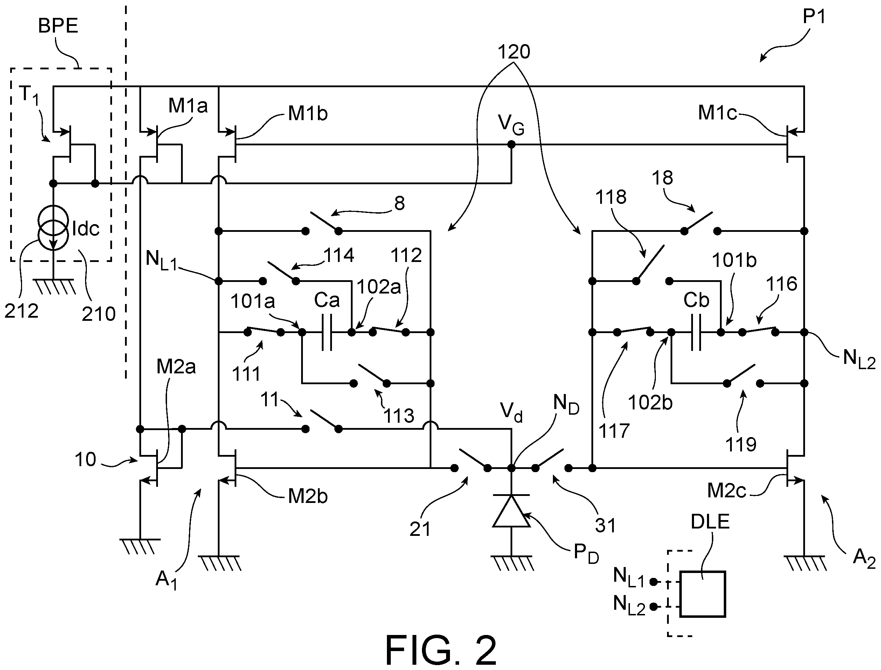

On se réfère à présent à la figure 2 sur laquelle un schéma électronique d'un exemple de pixel $P_1$ de profondeur de capteur d'images configuré pour faire l'acquisition d'images de profondeur d'une scène est donné.

Le pixel $P_1$ comprend un photodétecteur PD tel qu'une photodiode, en particulier une photodiode non pincée. Le pixel $P_1$ fait partie d'un ensemble de pixels du capteur, typiquement agencés en matrice et ayant de préférence une constitution identique à celle du pixel $P_1$. La photodiode peut être en particulier à base d'au moins un matériau semi-conducteur adapté à un fonctionnement dans le domaine de l'infrarouge ou du proche infrarouge, par exemple dans une plage entre 700 nm et 1100 nm, en particulier un semi-conducteur du groupe III-V tel que par exemple de l'InGaAs ou du InGaN, ou un matériau II-VI tel que par exemple du ZnS. La photodiode a ici sa cathode connectée à un nœud de détection $N_D$ et son anode mise à un potentiel bas, en particulier un potentiel de référence tel que la masse GND.

Le photodétecteur PD est associé et connecté à un circuit de lecture intégré au pixel $P_1$. Ce circuit de lecture est ici doté d'un premier élément de mémorisation pourvu d'une première capacité d'intégration Ca prévue pour collecter des charges, et notamment pour acquérir des échantillons de charges issues du photodétecteur PD et photo-générées par détection d'un signal lumineux réfléchi, lors de phases dites « d'échantillonnage ».

La première capacité d'intégration Ca est agencée ici dans une branche de rétroaction entre une entrée et une sortie d'un étage amplificateur A1 d'une structure d'amplificateur capacitif à trans-impédance CTIA (pour « Capacitive Transimpedance Amplifier »). L'entrée de l'étage amplificateur A1 correspond ici au nœud de détection $N_D$ tandis que la sortie de l'amplificateur A1 correspond à un premier nœud de lecture $N_{L1}$, lui-même couplé à un dispositif de lecture externe DLE (représenté de manière schématique sur cette figure) des échantillons, ce dispositif de lecture externe DLE étant typiquement partagé par un ensemble de pixels de la matrice auquel le pixel $P_1$ appartient.

Un tel dispositif de lecture DLE externe au pixel $P_1$ peut comprendre typiquement un circuit commun à des pixels d'une même colonne (i.e. rangée verticale) de pixels et peut être par exemple pourvu d'un étage à double échantillonnage corrélé (CDS pour « correlated double-sampling »).

Un exemple de dispositif de lecture externe DLE est donné dans la demande de brevet français n°2208374 déposée 18/08/2022 auprès de l'Institut National de la Propriété Industrielle (INPI).

L'étage amplificateur A1 est réalisé avec un nombre de transistors réduit, ici deux transistors $M_{1b}$, $M_{2b}$, ce qui permet de limiter l'encombrement du circuit de lecture.

Un premier transistor $M_{2b}$ de l'étage amplificateur A1, dans l'exemple illustré de type NMOS, a une électrode de source mise au potentiel bas et une électrode de drain reliée à la capacité d'intégration Ca ainsi qu'à un deuxième transistor $M_{1b}$, dans l'exemple illustré de type PMOS, formant une source de courant. Pour cela, le deuxième transistor $M_{1b}$ peut être monté en miroir de courant avec une portion 210 de circuit appartenant à un bloc de polarisation externe BPE, qui ne fait pas partie du circuit de lecture et est agencé hors du pixel $P_1$. Cette portion 210 de circuit peut être formée d'une source de courant 212 et d'un transistor $T_1$ dont la grille et le drain sont reliés à la grille du deuxième transistor $M_{1b}$. Le bloc de polarisation externe BPE est typiquement un circuit situé au bord de l'ensemble ou matrice de pixels auquel le pixel $P_1$.

Dans l'exemple de réalisation particulier illustré sur la figure 2, le pixel $P_1$ est doté en outre d'un deuxième élément de mémorisation pourvu d'une deuxième capacité d'intégration Cb. On dispose ainsi, dans cet exemple, de deux capacités d'intégration Ca, Cb par pixel de profondeur. La deuxième capacité d'intégration Cb est ici prévue pour acquérir des échantillons de charges, en particulier de charges issues du photo-détecteur PD lors de phases d'échantillonnage. La deuxième capacité d'intégration Cb est agencée dans une branche de rétroaction entre une entrée et une sortie d'un deuxième étage amplificateur A2 de la structure d'amplificateur capacitif à transimpédance CTIA (pour « Capacitive Transimpedance Amplifier »). L'entrée de l'étage amplificateur A2 correspond ici au nœud de détection $N_D$ tandis que la sortie de l'amplificateur A2 correspond à un deuxième nœud de lecture $N_{L2}$, lui-même couplé au dispositif de lecture externe DLE précité auquel est également couplé le premier nœud de lecture $N_{L1}$.

Ce deuxième étage amplificateur A2 a typiquement un agencement identique à celui du premier étage amplificateur A1.

Le deuxième étage amplificateur A2 est également réalisé avec un nombre de transistors réduit, ici deux transistors M1c, M2c. Le deuxième étage amplificateur A2 est pourvu d'un transistor M2c, ici de type NMOS, dont la grille est couplée au photo-détecteur PD. Le transistor M2c, dans l'exemple illustré de type NMOS, a une électrode de source mise au potentiel de référence et une électrode de drain reliée à la capacité d'intégration Cb et à un deuxième transistor M1c, dans l'exemple illustré de type PMOS, formant une source de courant. Pour cela, le transistor M1c peut être monté en miroir de courant avec la même portion de circuit appartenant au même bloc de polarisation externe BPE.

Le circuit de lecture est ici également muni d'un premier interrupteur d'échantillonnage 21 agencé entre la première capacité d'intégration Ca et le photo-détecteur PD, et d'un deuxième interrupteur d'échantillonnage 31 agencé entre la deuxième capacité d'intégration Cb et le photo-détecteur PD.

Des interrupteurs, 8, 18 de réinitialisation, sont prévus en parallèle, respectivement de la capacité Ca et de la capacité Cb. Ces interrupteurs 8, 18 de réinitialisation, permettent de réinitialiser les capacités d'intégration Ca et la capacité Cb au début d'une période d'intégration pendant laquelle plusieurs séquences répétées de phases distinctes d'échantillonnage C0, C1, C2, C3 sont effectuées par un ou plusieurs éléments de mémorisation d'un ou plusieurs pixels de profondeurs distincts du dispositif d'acquisition d'images.

Cette période d'intégration comporte un nombre important de séquences répétées de phases d'échantillonnage, avec typiquement entre plusieurs centaines et plusieurs millions de phases d'échantillonnage réalisées afin de mettre en œuvre une mesure de profondeur.

Chaque séquence comporte typiquement une succession de phases d'échantillonnage, par exemple de quatre phases $C_0$, $C_1$, $C_2$, $C_3$, de préférence de durées égales. Ainsi, on réalise une première phase d'échantillonnage $C_0$, une deuxième phase d'échantillonnage $C_1$ décalée de la première phase d'échantillonnage $C_0$ selon un décalage ou déphasage constant, une troisième phase d'échantillonnage $C_2$ décalée de la deuxième phase d'échantillonnage et de la troisième phase d'échantillonnage selon un décalage ou déphasage constant et une quatrième phase d'échantillonnage $C_3$ décalée de la deuxième phase d'échantillonnage et de la troisième phase d'échantillonnage selon un décalage ou déphasage constant.

Une séquence de quatre phases $C_0$, $C_1$, $C_2$, $C_3$ d'échantillonnage est ainsi typiquement répétée un nombre de fois donné par exemple supérieur à 10000 et par exemple compris entre 10000 et 100000.

Pour permettre d'assurer le maintien de la polarisation du photo-détecteur PD pendant la période d'intégration, le pixel $P_1$ est, dans cet exemple de réalisation particulier, doté d'un bloc 10 de réinitialisation de polarisation. Un interrupteur 11 de repolarisation est alors mis dans un état passant (i.e. état « ON » ou fermé) lors de phases de réinitialisation de polarisation notées RAZ, ce qui permet l'application d'un potentiel de polarisation au nœud de détection $N_D$.

Ces phases de réinitialisation de polarisation RAZ sont ici réalisées entre des phases d'échantillonnage mises en œuvre par la première capacité Ca et/ou la deuxième capacité Cb.

Lors de phases d'échantillonnage mises en œuvre par la première capacité Ca, l'interrupteur 11 de repolarisation est mis dans un état bloqué (i.e. état « OFF » ou ouvert) pour découpler le photo-détecteur PD du bloc 10 de réinitialisation de polarisation et l'interrupteur d'échantillonnage 31 est mis dans un état bloqué afin de découpler le photodétecteur PD de la deuxième capacité d'intégration Cb, tandis que le premier interrupteur d'échantillonnage 21, par exemple formé d'au moins un transistor, est rendu passant (i.e. fermé ou « ON ») afin de coupler le photo-détecteur PD à la première capacité d'intégration Ca.

Lors de phases d'échantillonnage mises en œuvre par la deuxième capacité Cb, l'interrupteur 11 de repolarisation est mis dans un état bloqué (i.e. état « OFF » ou ouvert) pour découpler le photo-détecteur PD du bloc 10 de réinitialisation de polarisation et le l'interrupteur d'échantillonnage 21 est mis dans un état bloqué afin de découpler le photodétecteur PD de la première capacité d'intégration Ca, tandis que le deuxième interrupteur d'échantillonnage 31, par exemple formé d'au moins un transistor, est rendu passant (i.e. fermé ou « ON ») afin de coupler le photo-détecteur PD à la deuxième capacité d'intégration Cb.

Le bloc 10 de réinitialisation de repolarisation est ici formé d'un transistor M1a, dans l'exemple illustré de type PMOS, monté en miroir de courant avec la portion 210 de circuit appartenant au bloc de polarisation externe BPE.

Le transistor M1a du bloc 10 de réinitialisation de polarisation et le deuxième transistor M1b de l'étage amplificateur A1 ont leurs grilles connectées entre elles et mises à un potentiel VG imposé par le bloc de polarisation externe BPE, leurs sources respectives étant mise à un potentiel d'alimentation haut, par exemple VDD.

Le transistor M1a du bloc 10 de réinitialisation de polarisation est couplé à un autre transistor M2a, dans cet exemple de type NMOS, dont la grille et le drain sont reliés. L'interrupteur 11 de repolarisation commandé par un signal de réinitialisation de polarisation RAZ est ici agencé entre la grille du transistor M2c et le nœud de détection $N_D$. Lors de phases de réinitialisation de polarisation RAZ, la cathode de la photodiode PD est couplée à la grille du transistor M2a.

Le circuit de lecture de la figure 2 a ici notamment pour particularité d'être doté d'un circuit de commutation 120 comportant des éléments interrupteurs 111, 112, 113, 114, 116, 117, 118, 119 par exemple formés chacun d'un ou plusieurs transistors.

Un premier groupe d'interrupteurs 111, 112, 113, 114 est ici associé à la première capacité Ca d'intégration tandis qu'un deuxième groupe d'interrupteurs 116, 117, 118, 119 est ici associé à la deuxième capacité Cb d'intégration.

Le premier groupe d'éléments interrupteurs comprend :

- un premier élément interrupteur 111 entre une première électrode 101a de la première capacité Ca et le premier nœud de lecture $N_{L1}$ ;
- un deuxième élément interrupteur 112 entre une deuxième électrode 102a de la première capacité Ca et le nœud de détection $N_D$ ;

- un troisième élément interrupteur 113 entre la première électrode 101a de la première capacité Ca et le nœud de détection $N_D$ ;
- un quatrième élément interrupteur 114 entre la deuxième électrode 102a de la première capacité Ca et le premier nœud de lecture $N_{L1}$.
- Le deuxième élément interrupteur 112 peut être relié au nœud de détection $N_D$ par l'intermédiaire de l'interrupteur d'échantillonnage 21 lorsque cet interrupteur 21 est fermé (passant).
- Le troisième élément interrupteur 113 peut être relié au nœud de détection $N_D$ par l'intermédiaire de l'interrupteur d'échantillonnage 21 lorsque cet interrupteur 21 est fermé (passant).

Le deuxième groupe d'éléments interrupteurs comprend :

- un premier élément interrupteur 116 entre une première électrode 101b de la deuxième capacité Cb et le deuxième nœud de lecture $N_{L2}$ ;
- un deuxième élément interrupteur 117 entre une deuxième électrode 102b de la deuxième capacité Cb et le nœud de détection $N_D$ ;
- un troisième élément interrupteur 118 entre la première électrode 101b de la deuxième capacité Cb et le nœud de détection $N_D$ ;
- un quatrième élément interrupteur 119 entre la deuxième électrode 102b de la deuxième capacité Cb et le deuxième nœud de lecture $N_{L2}$.

Le deuxième élément interrupteur 117 peut être relié au nœud de détection $N_D$ par l'intermédiaire de l'interrupteur d'échantillonnage 31 lorsque cet interrupteur 31 est fermé (passant).

Le troisième élément interrupteur 118 peut être relié au nœud de détection $N_D$ par l'intermédiaire de l'interrupteur d'échantillonnage 31 lorsque cet interrupteur 31 est fermé (passant).

Le circuit de commutation 120 est configuré pour lors d'au moins une première phase d'échantillonnage effectuée par la première capacité Ca adopter une première configuration, avec les premier et deuxième interrupteurs 111, 112 fermés (i.e. passants) tandis que le troisième et quatrième interrupteurs 113, 114 sont ouverts (i.e. bloqués) de sorte à coupler la première électrode 101a de la capacité d'intégration Ca au premier nœud de lecture $N_{L1}$ et la deuxième électrode 102a au nœud de détection $N_D$, puis, lors d'au moins une deuxième phase d'échantillonnage effectuée par la première capacité Ca, adopter une deuxième configuration, avec les interrupteurs 111, 112 ouverts (i.e. bloqués) tandis que les interrupteurs 113, 114 sont fermés (i.e. passants) de sorte à coupler la première électrode 101a de la capacité d'intégration Ca au nœud de détection $N_D$ et la deuxième électrode 102a de la capacité d'intégration Ca au nœud de lecture $N_{L1}$.

Par phase « d'échantillonnage », on entend ici et dans toute la description une phase pendant laquelle une capacité est connectée au nœud de détection par le biais de son interrupteur d'échantillonnage 21 ou 31 associé, afin soit d'effectuer l'acquisition d'échantillons d'un signal réfléchi lorsqu'un signal lumineux est émis par le dispositif d'acquisition soit de réaliser une collecte de charges pour effectuer un étalonnage ou une mesure sans qu'un signal lumineux ne soit émis par le dispositif d'acquisition.

Un tel retournement de capacité peut permettre d'obtenir des échantillons +EC et -EC de signes opposés et de compenser la présence éventuelle de lumière parasite et éviter son stockage et gagner ainsi en rapport signal sur bruit. Il participe également à éviter une saturation de la capacité et permet d'améliorer la dynamique de courant traité issu du photodétecteur PD.

Avec un pixel tel que décrit précédemment, on peut également réaliser des phases d'échantillonnage sans signal lumineux émis et qui sont prévues pour permettre d'évaluer un décalage (offset) dû à un décalage de propriétés entre les différentes structures décrites, en particulier les amplificateurs et la référence de tension M2a. Un offset stocké de façon positive lors de la première phase d'échantillonnage est donc retranché lors de la seconde phase d'échantillonnage.

Le circuit de commutation est également configuré pour lors d'au moins une première phase d'échantillonnage de la deuxième capacité Cb adopter une configuration, avec les interrupteurs 116, 117 fermés (i.e. passants) tandis que les interrupteurs 118, 119 sont ouverts (i.e. bloqués) de sorte à coupler la première électrode 101b de la capacité d'intégration Cb au deuxième nœud de détection $N_D$ et la deuxième électrode 102b au nœud lecture $N_{L2}$, puis, lors d'au moins une deuxième phase d'échantillonnage de la deuxième capacité Cb, adopter une autre configuration, avec les interrupteurs 116, 117 ouverts (i.e. bloqués) tandis que les interrupteurs 118, 119 sont fermés (i.e. passants) de sorte à coupler la première électrode 101b de la capacité d'intégration Cb au nœud de lecture $N_{L2}$ et la deuxième électrode 102b de la capacité d'intégration Cb au nœud de détection $N_D$.

De même, on peut réaliser des phases d'échantillonnage sans signal lumineux émis et qui sont prévues pour permettre d'évaluer un décalage (offset) stocké dans la deuxième capacité Cb.

Un tel circuit de commutation permet d'inverser la polarité autrement dit de faire tourner chaque capacité Ca, Cb pendant la période d'intégration. Cela permet de compenser d'éventuels défauts liés à un possible déséquilibre entre transistors.

Lors des phases de réinitialisation RAZ, la tension de grille du transistor M2a du bloc de repolarisation sert de potentiel de réinitialisation à la photodiode PD. Lors du début de l'acquisition, par exemple avec le deuxième amplificateur A2 et son transistor M2c, un équilibre électrique est sensé s'établir de sorte que le potentiel de grille sur ce transistor M2c corresponde au potentiel du transistor M2a. Sous des effets d'éventuelles différences de propriétés (« mismatch ») non désirées entre les différents transistors, les deux potentiels de grille, celui du transistor M2a et celui du transistor M2c peuvent être différents. Cela pourrait conduire à l'intégration éventuelle d'un signal parasite. En outre, la valeur de ce signal est potentiellement différente lorsque l'on intègre avec le deuxième amplificateur et son transistor associé M2b, ce qui pourrait avoir tendance à dégrader le rapport signal sur bruit. Cette dégradation n'est pas identique pour tous les amplificateurs et donc difficile à compenser par la suite avec une structure différentielle.

Une alternance de phases tel que décrit précédemment peut permettre de pallier cette problématique.

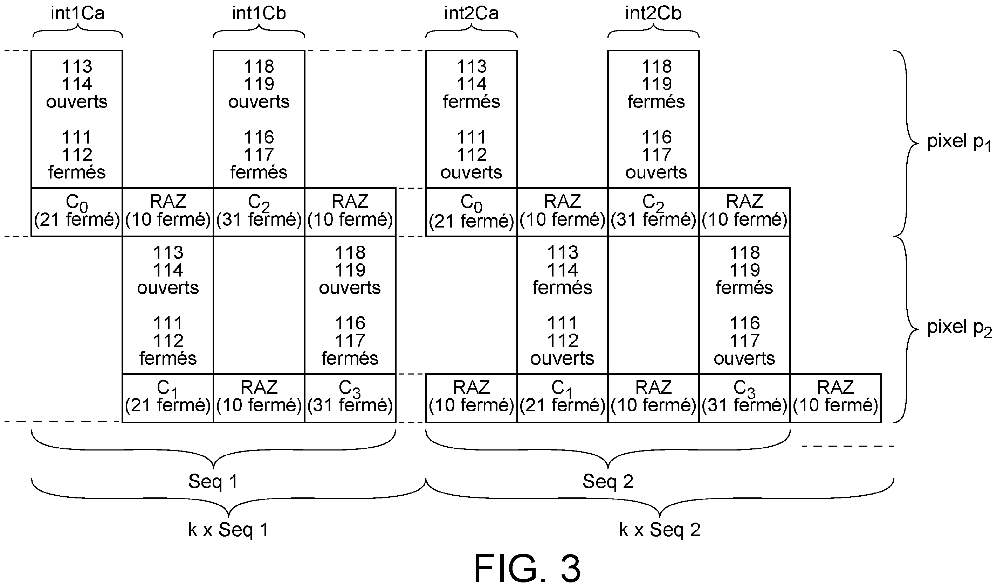

Une période d'intégration comprenant une succession répétée de k fois une première séquence seq1 d'échantillonnage puis de k fois une deuxième séquence seq2 d'échantillonnage, est illustrée de manière schématique sur la figure 3 et sert à illustrer un mode de fonctionnement particulier du circuit de lecture du pixel p1 décrit précédemment en lien avec la figure 2 et d'un deuxième pixel p2 dont le circuit de lecture est identique et appartient au même ensemble de pixels que le premier pixel p1. Chacune des première séquence Seq1 et deuxième séquence Seq2 est composée successivement d'une première phase d'échantillonnage C0, d'une deuxième phase d'échantillonnage C1, d'une troisième phase d'échantillonnage C2, et d'une quatrième phase d'échantillonnage C3.

La première phase d'échantillonnage C0 de la première séquence Seq1 est effectuée par la première capacité d'intégration Ca du premier pixel p1.

La deuxième phase d'échantillonnage C1 de la première séquence Seq1 est ensuite effectuée par le deuxième pixel p2. Pendant cette deuxième phase, d'échantillonnage C2, une phase de réinitialisation de polarisation RAZ du photodétecteur PD du premier pixel p1 peut être réalisée.

Puis, la troisième phase d'échantillonnage C2 de la première séquence Seq1 est effectuée par la deuxième capacité d'intégration Cb du premier pixel p1.

Ensuite, la quatrième phase d'échantillonnage C3 de la première séquence Seq1 est effectuée par le deuxième pixel p2. Là encore, une phase de réinitialisation de polarisation RAZ du photodétecteur PD est mise en œuvre entre les deux échantillonnages effectués par un même pixel.

Ensuite, la première phase d'échantillonnage C0 de la deuxième séquence Seq2 est effectuée par la première capacité d'intégration Ca du premier pixel p1.

La deuxième phase d'échantillonnage C1 de la deuxième séquence Seq2 est ensuite effectuée par le deuxième pixel p2.

Puis, la troisième phase d'échantillonnage C2 de la deuxième séquence Seq2 est effectuée cette fois par de la deuxième capacité d'intégration Cb du premier pixel p1.

La quatrième phase d'échantillonnage C3 de la deuxième séquence Seq2 est ensuite effectuée par le deuxième pixel p2.

Ainsi, entre la répétition de k fois la première séquence seq1 puis de k fois la deuxième séquence seq2, on fait tourner chacune des capacités Ca, Cb pour permettre de compenser un éventuel déséquilibre entre transistors.

La première séquence seq1, et la deuxième seq2 sont répétées chacune un nombre important k pendant une période d'intégration par exemple avec k compris entre 5000 et 50000 fois.

Afin notamment d'éviter que des phases de mesure de décalage (offsets) ne provoquent une saturation des amplificateurs, on peut prévoir d'alterner phases de mesure d'offset (sans signal lumineux) et périodes d'échantillonnage de signal lumineux, plusieurs fois, de façon consécutive et sur des durées plus courtes.

Dans l'exemple de réalisation décrit précédemment, on prévoit typiquement une phase de réinitialisation de polarisation RAZ du photodétecteur PD entre deux phases consécutives d'échantillonnage réalisées par une même capacité Ca ou Cb.

Une telle réinitialisation peut s'avérer optionnelle notamment si l'on adapte les durées des phases d'échantillonnage.

Plutôt que d'enchaîner des phases d'échantillonnage dont la durée correspond à la collecte d'un échantillon, on peut prévoir de réaliser un échantillonnage sur deux périodes consécutives dédiées à la collecte d'échantillon. Il peut alors suffire de réaliser une opération mathématique (addition et soustraction) pour obtenir des valeurs recherchées permettant d'aboutir à une formule de déphasage $\Delta\varphi$ telle qu'évoquée précédemment.

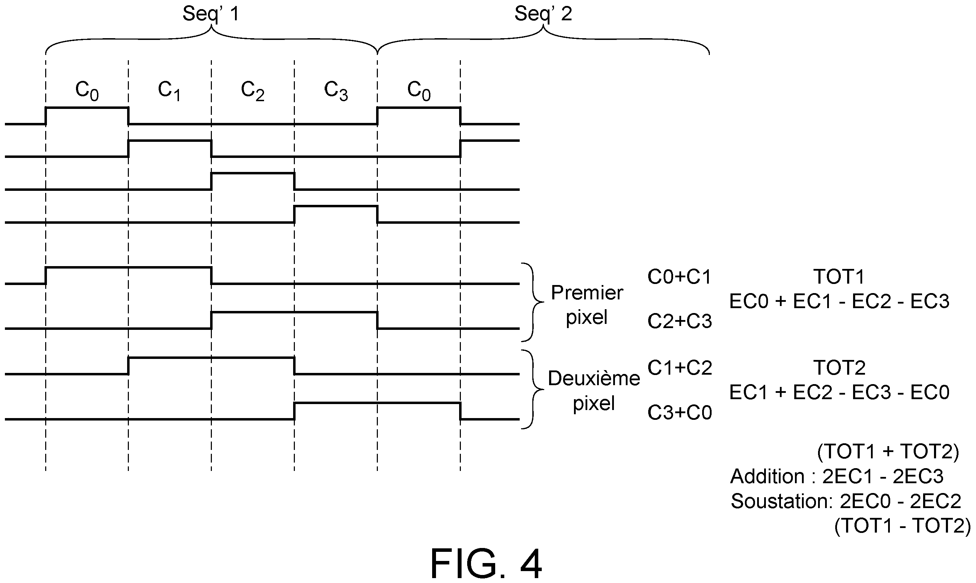

Une suite de séquences seq'1, seq'2 successives reprenant ce principe est donnée sur la figure 4 et sert ainsi à illustrer un autre mode de fonctionnement de circuits de lecture d'un premier pixel p1 et d'un deuxième pixel p2. Pour permettre notamment un gain de place ces circuits peuvent être dépourvus de blocs de réinitialisation de polarisation RAZ du photodétecteur PD.

Chacune des première séquence Seq'1 et deuxième séquence Seq'2 est composée successivement d'une première phase d'échantillonnage C0, d'une deuxième phase d'échantillonnage C1, d'une troisième phase d'échantillonnage C2, et d'une quatrième phase d'échantillonnage C3.

La première phase d'échantillonnage C0 et la deuxième phase d'échantillonnage C1 de la première séquence Seq'1 sont effectuées par une capacité d'intégration Ca ou Cb d'un premier pixel.

La troisième phase d'échantillonnage C2 et la quatrième phase d'échantillonnage C3 de la première séquence Seq'1 sont effectuées par l'autre capacité d'intégration Cb ou Ca du premier pixel, par exemple la capacité d'intégration Cb lorsque la première phase d'échantillonnage et la deuxième phase ont été effectuées par la capacité d'intégration Ca.

Durant cette même première séquence Seq'1, la deuxième phase d'échantillonnage et la troisième phase d'échantillonnage sont effectuées par une capacité d'intégration Ca d'un deuxième pixel, la quatrième phase d'échantillonnage de la première séquence Seq1 et la première phase d'échantillonnage de la deuxième séquence étant effectuées par l'autre capacité d'intégration Cb du deuxième pixel.

Ainsi, le premier pixel permet de collecter des échantillons |EC0 + EC1| puis des échantillons |EC2 + EC3| pendant la première Seq'1.

Le deuxième pixel permet de collecter des échantillons |EC1 + EC2| pendant la première Seq'1 puis des échantillons |EC3 + EC0| pendant la première Seq'1 puis la deuxième séquence Seq'2.

En pratiquant l'inversion ou le retournement de capacités en modifiant la connexion des électrodes de chacune par rapport au nœud de détection et au nœud de lecture, on peut obtenir, un total d'échantillons TOT1 pour le premier pixel égal à EC0+EC1-EC2-EC3 à l'issue des deux séquences Seq1, Seq2 et pour le deuxième pixel à l'issue de la première phase C0 de la deuxième séquence Seq2 un total TOT2 d'échantillons EC1+EC2-EC3-EC0. En additionnant ces deux totaux, on obtient TOT1+TOT2 = 2*EC1+2*EC3. En soustrayant ces deux totaux, on obtient TOT1-TOT2 = 2*EC1-2*EC3. Ces opérations permettent d'aboutir à un déphasage selon une formule telle que donnée précédemment.

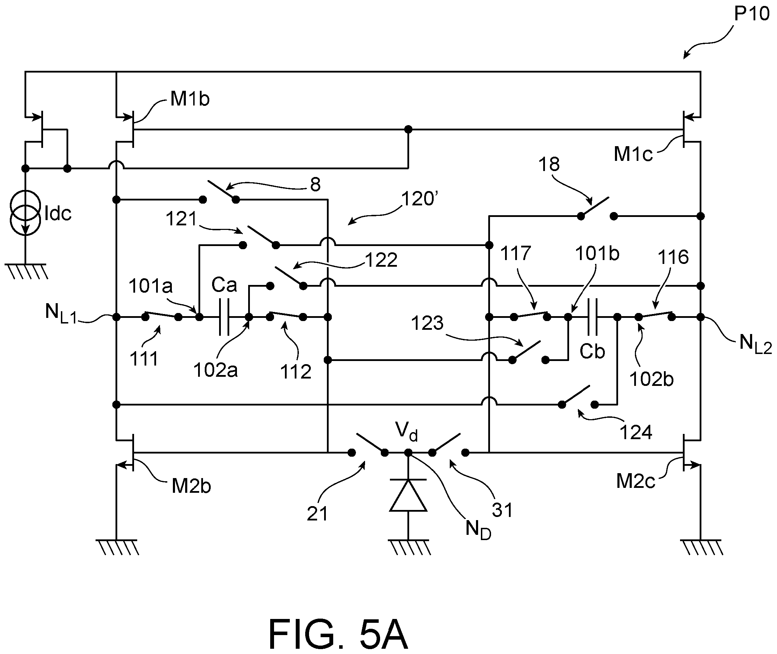

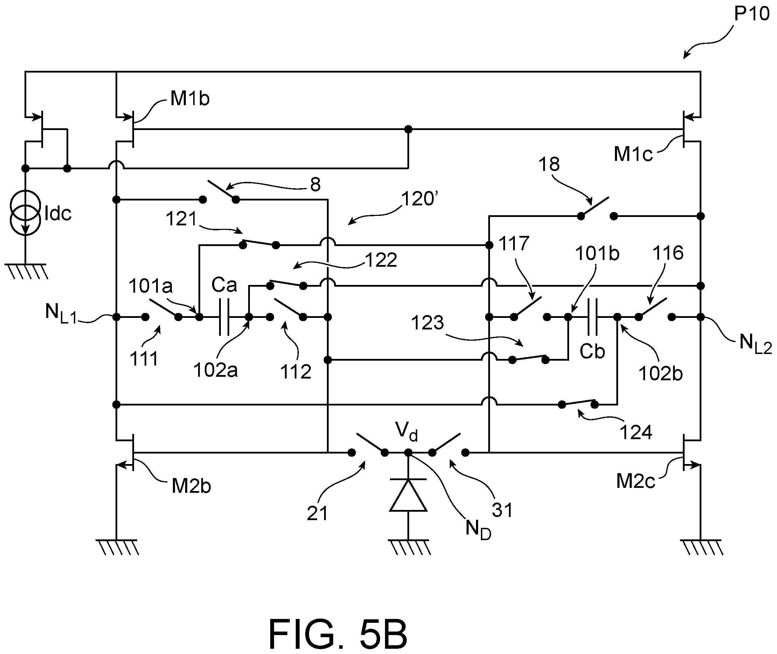

Sur les figures 5A et 5B, un autre exemple de pixel $P_{10}$ de profondeur, susceptible d'adopter un mode de fonctionnement tel que décrit précédemment en lien avec la figure 4 est donné et diffère de celui décrit précédemment en lien avec la figure 2, en ce que son circuit de lecture est dépourvu de bloc de réinitialisation de polarisation RAZ du photodétecteur PD.

L'agencement de son circuit 120' de commutation diffère également du circuit de commutation 120 décrit précédemment en liaison avec la figure 2.

Le circuit de commutation 120' comporte ici un groupe d'interrupteurs 111, 112, associés à la première capacité Ca avec :

- le premier élément interrupteur 111 entre la première électrode 101a de la première capacité Ca et le premier nœud de lecture $N_{L1}$ ;
- le deuxième élément interrupteur 112 entre la deuxième électrode 102a de la première capacité Ca et le nœud de détection $N_D$.

Le circuit 120' comporte également un groupe d'éléments interrupteurs 117, 116, associés à la deuxième capacité Cb avec :

- un élément interrupteur 117 entre une première électrode 101b de la deuxième capacité Cb et le nœud de détection $N_D$;
- un élément interrupteur 116 entre une deuxième électrode 102b de la deuxième capacité Cb et le premier nœud de lecture $N_{L2}$.

Le circuit de commutation 120' comporte ici également :

- un élément interrupteur 121 entre la première électrode 101a de la première capacité Ca et le nœud de détection $N_D$ ;
- un élément interrupteur 122 entre la deuxième électrode 102a de la première capacité Ca et le deuxième nœud de lecture $N_{L2}$ ;
- un élément interrupteur 123 entre la première électrode 101b de la deuxième capacité Cb et le nœud de détection $N_D$ ;
- un élément interrupteur 124 entre la deuxième électrode 102b de la deuxième capacité Cb et le premier nœud de lecture $N_{L1}$.

Une première configuration du circuit de commutation 120' est illustrée sur la figure 5A avec une première électrode 101a de la première capacité d'intégration Ca couplée au premier nœud de lecture $N_{L1}$ et une deuxième électrode 102a de cette même première capacité d'intégration Ca couplée au nœud de détection $N_D$. La première électrode 101b de la deuxième capacité d'intégration Cb est alors couplée au nœud de détection $N_D$ et la deuxième électrode 102b de cette deuxième capacité d'intégration Cb couplée au deuxième nœud de lecture $N_{L2}$.

Pour cela, les interrupteurs 111, 112, 117, 118 sont fermés (i.e. passants) tandis que les interrupteurs 121, 122, 123, 124 sont ouverts (i.e. bloqués).

Une deuxième configuration du circuit de commutation 120' est illustrée sur la figure 5B avec la première électrode 101a de la première capacité d'intégration Ca couplée au premier nœud de détection $N_D$ et la deuxième électrode 102a de cette même première capacité d'intégration Ca couplée au deuxième nœud de lecture $N_{L2}$. La première électrode 101b de la deuxième capacité d'intégration Cb est alors couplée au nœud de détection $N_D$ et la deuxième électrode 102b de cette deuxième capacité d'intégration Cb est couplée au premier nœud de lecture $N_{L1}$.

Pour obtenir cette deuxième configuration, les interrupteurs 111, 112, 117, 118 sont ouverts (i.e. bloqués) tandis que les interrupteurs 121, 122, 123, 124 sont fermés (i.e. passants).

En alternant entre la première configuration et la deuxième configuration, on associe alternativement : dans un premier temps les capacités Ca, Cb respectivement au premier amplificateur A1 et au deuxième amplificateur A2, et dans un deuxième temps les capacités Ca, Cb respectivement au deuxième amplificateur A2 et au premier amplificateur A1 tout en modifiant la polarité des deux capacités Ca, Cb.

Un tel mode de fonctionnement permet de compenser un éventuel décalage (offset) qu'il peut y avoir entre le transistor M2b du premier amplificateur A1 et le transistor M2c du deuxième amplificateur A2.

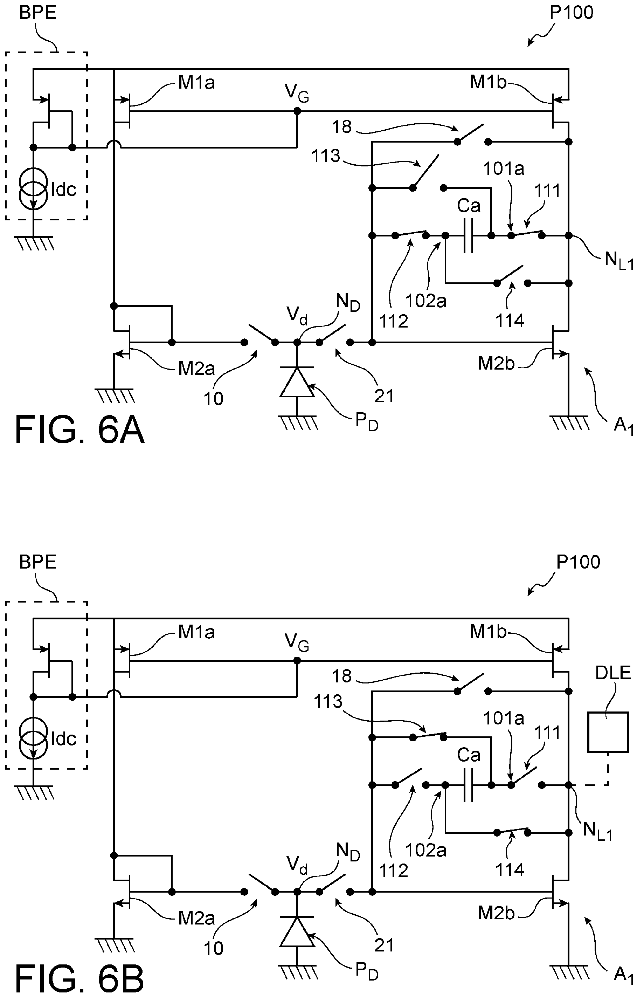

Sur les figures 6A et 6B, un autre exemple de réalisation d'un circuit de lecture d'un pixel $P_{100}$ de profondeur est donné et diffère de celui décrit précédemment en lien avec la figure 2, notamment en ce qu'il comporte ici un seul élément de mémorisation avec ici une seule capacité Ca d'intégration, ce qui peut permettre d'obtenir un encombrement réduit.

Le circuit de commutation 120 comporte ici des éléments interrupteurs 111, 112, 113, 114, associés à l'unique capacité Ca d'intégration avec :

- un premier élément interrupteur 111 entre une première électrode 101a de la capacité Ca et le nœud de lecture $N_{L1}$ ;
- un deuxième élément interrupteur 112 entre une deuxième électrode 102a de la capacité Ca et le nœud de détection $N_D$ ;
- un troisième élément interrupteur 113 entre la deuxième électrode 102a de la première capacité Ca et le nœud de détection $N_D$ ;
- un quatrième élément interrupteur 114 entre la première électrode 101a de la première capacité Ca et le nœud de lecture $N_{L1}$.

Une première configuration du circuit de commutation 120, est illustrée sur la figure 6A, avec la première électrode 101a de la première capacité d'intégration Ca couplée au premier nœud de lecture $N_{L1}$ et la deuxième électrode 102a de cette même première capacité d'intégration Ca couplée au nœud de détection $N_D$. Pour cela, les interrupteurs 111, 112, sont fermés (i.e. passants) tandis que les interrupteurs 113, 114 sont ouverts (i.e. bloqués). Le circuit de commutation 120, doté ici d'une seule capacité Ca, d'intégration peut être mis dans une telle configuration lorsque le circuit de lecture se trouve dans des phases d'échantillonnage par la capacité Ca.

Une deuxième configuration du circuit de commutation 120, est illustrée sur la figure 6B avec la première électrode 101a de la première capacité d'intégration Ca couplée cette fois au nœud de détection $N_D$ et la deuxième électrode 102a de cette même première capacité d'intégration Ca couplée au premier nœud de lecture $N_{L1}$. Pour cela, les interrupteurs 111, 112, sont ouverts (i.e. bloqués) tandis que les interrupteurs 113, 114 sont fermés (i.e. passants). Le circuit de commutation 120 doté ici d'une seule capacité Ca d'intégration peut être mis dans une telle configuration lorsque le circuit de lecture se trouve dans d'autres phases d'échantillonnage par la capacité Ca.

Un tel circuit permettant de retourner la capacité d'une intégration à une autre peut là encore, permettre de compenser des effets de décalage (offsets) et d'acquisition de lumière parasite.

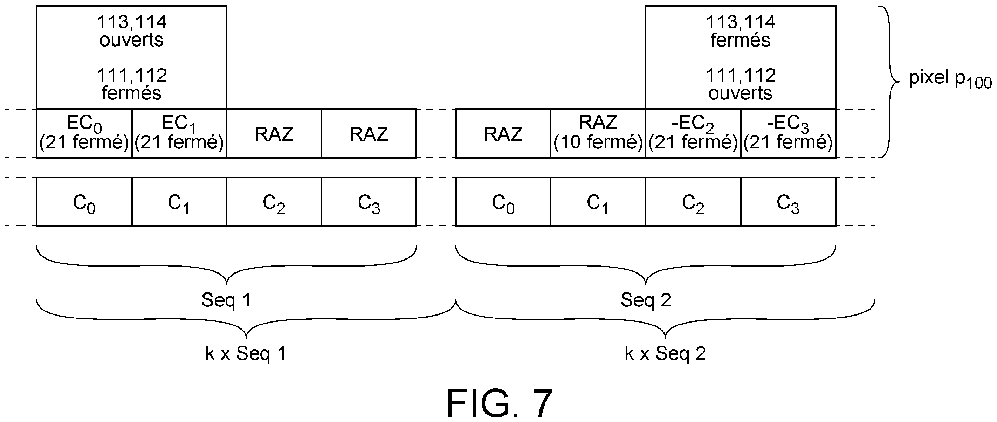

Un premier mode de fonctionnement d'un tel pixel $P_{100}$ est donné sur la figure 7 et sert à illustrer une période d'intégration lors de laquelle une répétition de k fois une première séquence seq1, et de k fois une deuxième seq2 successives d'échantillonnage est effectuée. La première séquence Seq1 et la deuxième séquence Seq2 sont ici encore composées chacune d'une première phase d'échantillonnage C0, d'une deuxième phase d'échantillonnage C1, d'une troisième phase d'échantillonnage C2, et d'une quatrième phase d'échantillonnage C3.

La première phase d'échantillonnage puis la deuxième phase d'échantillonnage de la première séquence Seq1 sont mises en œuvre par la même capacité d'intégration Ca lorsque le circuit de commutation 120 se trouve dans sa première configuration et correspondent à une collecte d'échantillons EC0 et EC1.

Une réinitialisation de polarisation RAZ du photodétecteur PD du pixel p100 peut être ensuite effectuée lors de la troisième phase d'échantillonnage C2 et/ou de la quatrième phase d'échantillonnage C3.

Puis, après avoir effectué k fois la première 0première séquence Seq1, la troisième phase d'échantillonnage C2 et de la quatrième phase C3 de la deuxième séquence Seq2 sont mises en œuvre par la première capacité d'intégration Ca du pixel p100, correspondent à une deuxième phase d'échantillonnage de la capacité Ca lorsque le circuit de commutation 120 se trouve dans sa deuxième configuration. Une réinitialisation de polarisation RAZ du photodétecteur PD du pixel p100 est alors effectuée lors de la première phase d'échantillonnage C0 et de la deuxième phase d'échantillonnage C1. La première séquence permet ainsi d'obtenir une valeur EC0+EC1, tandis que, après retournement de la capacité Ca, la deuxième séquence Seq2 permet d'obtenir la valeur - EC2-EC3. On peut obtenir à l'issue de ces deux séquences Seq1, Seq2 successives un total EC0+EC1-EC2-EC3. Comme indiqué précédemment, un enchainement de k fois la première séquence Seq1, puis k fois la deuxième séquence Seq2 est mis en œuvre avec k un nombre élevé, par exemple entre 5000 et 50000 fois au cours d'une période d'intégration.

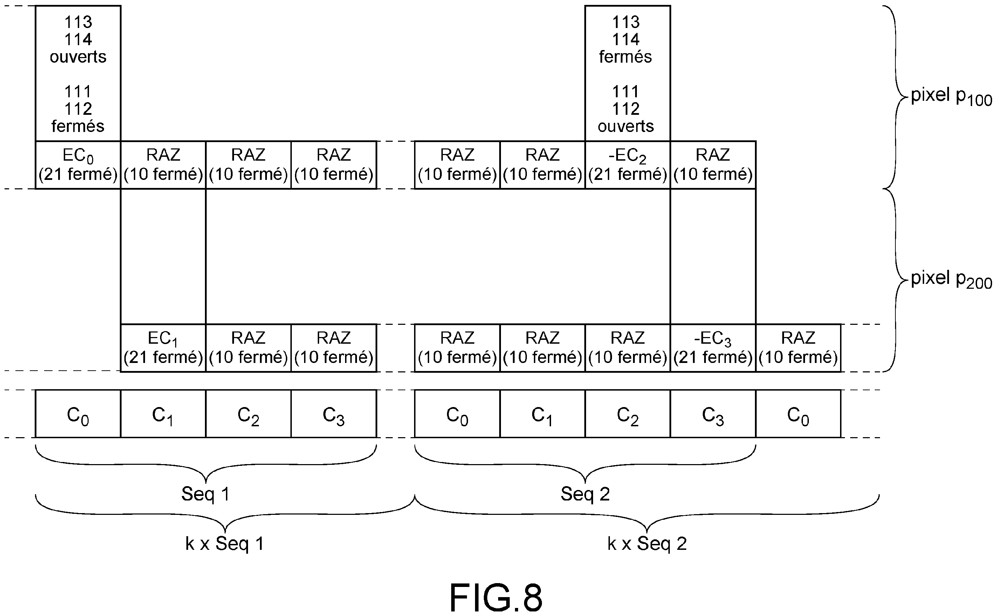

D'autres modes de fonctionnement du pixel $P_{100}$ peuvent être prévus. Ainsi, un autre exemple de période d'intégration est illustré sur la figure 8, toujours avec une répétition de k fois la première séquence seq1, puis de k fois la deuxième séquence seq2.

La première phase d'échantillonnage C0 de la première séquence Seq1 est mise en œuvre par la première capacité d'intégration Ca du pixel p100 et correspond à une collection de charges par la capacité Ca lorsque le circuit de commutation 120 se trouve dans sa première configuration.

Une réinitialisation de polarisation RAZ du photodétecteur PD du pixel p100 peut être alors effectuée lors des deuxième phase d'échantillonnage C1, troisième phase d'échantillonnage C2 et quatrième phase d'échantillonnage C3.

La troisième phase d'échantillonnage C2 de la deuxième séquence Seq2 est mise en œuvre par la première capacité d'intégration Ca du pixel p100 et correspond à une collection de charges par la capacité Ca lorsque le circuit de commutation 120 se trouve dans sa deuxième configuration. Une réinitialisation de polarisation RAZ du photodétecteur PD du pixel p100 est alors effectuée lors de la première phase d'échantillonnage C0 de la deuxième phase d'échantillonnage C1 et de la quatrième phase C2 d'échantillonnage.

La première séquence permet ainsi d'obtenir une valeur EC0, tandis que, après retournement de la capacité Ca, la deuxième séquence Seq2 permet d'obtenir la valeur -EC2. On peut obtenir à l'issue de ces deux séquences Seq1, Seq2, un total d'échantillons EC0-EC2, tandis qu'un autre pixel permet d'obtenir EC1-EC3 à l'issue de ces deux séquences Seq1, Seq2.

## Revendications

1. Dispositif d'acquisition d'images de profondeur d'une scène par détection d'un signal lumineux réfléchi correspondant à la réflexion sur la scène d'un signal lumineux incident, en particulier dans le proche infrarouge, le dispositif d'acquisition étant doté d'un ensemble de pixels de profondeur, chaque pixel de profondeur dudit ensemble comprenant un circuit de lecture associé à un photo-détecteur (PD), le circuit de lecture comportant un nœud de détection ($N_D$) auquel le photo-détecteur (PD) est connecté, le circuit de lecture étant doté :

   - d'un élément de mémorisation comportant une capacité d'intégration (Ca) configurée pour acquérir des échantillons de charges issues du photo-détecteur (PD) lors de phases d'échantillonnage effectuées au cours d'une période d'intégration comportant des séquences répétées de phases successives d'échantillonnage de charges,
   - d'au moins un étage amplificateur comportant en entrée, ledit nœud de détection ($N_D$) couplé au photo-détecteur (PD) et en sortie, un nœud de lecture ($N_{L1}$) apte à être couplé à un dispositif de lecture externe (DLE) et commun audit ensemble de pixels de profondeurs,
   au moins un premier pixel ($P_1$, $P_{100}$) dudit ensemble de pixels de profondeur étant doté en outre d'un circuit de commutation (120) comportant des éléments interrupteurs (111, 112, 113, 114 ; 116, 117, 118, 119) et configuré pour :

      - lors de phases d'échantillonnage de la capacité d'intégration (Ca) du premier pixel ($P_1$, $P_{10}$, $P_{100}$) adopter une première configuration de sorte à coupler une première électrode (101a) de ladite capacité d'intégration (Ca) au nœud de lecture ($N_{L1}$) et une deuxième électrode (102a) de la capacité d'intégration (Ca) au nœud de détection ($N_D$), puis,
      - lors d'autres phases d'échantillonnage de la capacité d'intégration (Ca) du premier pixel ($P_1$, $P_{100}$) adopter une deuxième configuration de sorte à coupler la première électrode (101a) de la capacité d'intégration (Ca) au nœud de détection ($N_D$) et la deuxième électrode (102a) de la capacité d'intégration au nœud de lecture ($N_{L1}$).

2. Dispositif selon la revendication 1, dans lequel ladite capacité d'intégration (Ca) est une première capacité d'intégration et dans lequel ledit étage amplificateur est un premier étage amplificateur, le circuit de lecture comprenant en outre :

   - une deuxième capacité d'intégration (Cb),
   - un deuxième étage amplificateur, le deuxième étage amplificateur comportant en entrée, le nœud de détection ($N_D$) couplé au photodétecteur (PD) et en sortie, le deuxième nœud de lecture ($N_{L2}$).

**3.** Dispositif selon la revendication 2, dans lequel, dans la première configuration, la première électrode (101a) de la première capacité d'intégration (Ca) est couplée au nœud de lecture ($N_{L1}$) et la deuxième électrode (102a) de la capacité d'intégration (Ca) est couplée au nœud de détection ($N_D$), et dans lequel dans la deuxième configuration la première électrode (101a) de la première capacité d'intégration (Ca) est couplée au nœud de détection ($N_D$) et la deuxième électrode (102a) de la première capacité d'intégration (Ca) est couplée au nœud de lecture ($N_L$), le circuit de commutation (120) étant configuré pour :

- lors de phases d'échantillonnage de la deuxième capacité d'intégration ($C_b$) coupler une première électrode (101b) de la deuxième capacité d'intégration ($C_b$) au deuxième nœud de lecture ($N_{L2}$) et une deuxième électrode (102b) de la deuxième capacité d'intégration ($C_{INT1}$) au nœud de détection ($N_D$), puis
- lors d'autres phases d'échantillonnage de la deuxième capacité d'intégration, coupler la première électrode (101b) de la deuxième capacité d'intégration ($C_{INT1}$) au nœud de détection ($N_D$) et la deuxième électrode (102b) de la deuxième capacité d'intégration ($C_b$) au deuxième nœud de lecture ($N_{L2}$).

**4.** Dispositif selon la revendication 3, dans lequel les séquences répétées de phases successives d'échantillonnage comportent une répétition d'une première séquence d'échantillonnage (Seq1) suivie d'une répétition d'une deuxième séquence d'échantillonnage (Seq2), chacune desdites première séquence (Seq1) et deuxième séquence (Seq2) comportant une première phase d'échantillonnage (C0), une deuxième phase d'échantillonnage (C1), une troisième phase d'échantillonnage (C2), et une quatrième phase d'échantillonnage (C3), la première phase d'échantillonnage (C0) de la première séquence (Seq1) et la troisième phase d'échantillonnage (C2) de la première séquence (Seq1) étant effectuées respectivement, par la première capacité d'intégration (Ca) du premier pixel (p1) et par la deuxième capacité d'intégration (Cb) du premier pixel (p1), la première phase d'échantillonnage (C0) de la deuxième séquence (Seq2) et la troisième phase d'échantillonnage (C2) de la deuxième séquence (Seq2) étant effectuées respectivement par la première capacité d'intégration (Ca) du premier pixel (p1) et par la deuxième capacité d'intégration (Cb) du premier pixel (p1), la deuxième phase d'échantillonnage (C1) et la quatrième phase d'échantillonnage (C3) de la première séquence (séq1) et de la deuxième séquence étant effectuées par au moins un circuit de lecture d'au moins un autre pixel (p2 )de profondeur dudit ensemble.

**5.** Dispositif selon la revendication 1, dans lequel le circuit de lecture est doté d'une unique capacité d'intégration (Ca) et dans lequel lesdites phases d'échantillonnage sont des phases d'échantillonnage de la capacité d'intégration pendant lesquelles la première électrode (101a) de la capacité d'intégration (Ca) est couplée au nœud de lecture ($N_{L1}$) et la deuxième électrode (102a) de la capacité d'intégration (Ca) est couplée au nœud de détection ($N_D$), lesdites autres phases d'échantillonnage étant des phases d'échantillonnage pendant lesquelles la première électrode (101a) de la capacité d'intégration (Ca) est couplée au nœud de détection ($N_D$) et la deuxième électrode (102a) de la capacité d'intégration (Ca) est couplée au nœud de lecture ($N_{L1}$).

**6.** Dispositif selon la revendication 5, dans lequel les séquences répétées de phases successives d'échantillonnage comportent une répétition d'une première séquence d'échantillonnage puis une répétition d'une deuxième séquence d'échantillonnage, la première séquence d'échantillonnage et la deuxième séquence d'échantillonnage comportant chacune une succession d'une première phase d'échantillonnage (C0), d'une deuxième phase d'échantillonnage (C1), d'une troisième phase d'échantillonnage (C2), et d'une quatrième phase d'échantillonnage (C3), la première phase d'échantillonnage, la deuxième phase d'échantillonnage (C1), troisième phase d'échantillonnage (C2), la quatrième phase d'échantillonnage (C3) ayant des durées égales,

la première phase d'échantillonnage (C0) et la deuxième phase d'échantillonnage (C1) de la première séquence (Seq1) étant effectuées par le premier pixel ($p_{100}$) dans la première configuration du circuit de commutation, la troisième phase d'échantillonnage (C2) et la quatrième phase d'échantillonnage (C3) de la deuxième séquence (Seq2) étant effectuées par le premier pixel ($p_{100}$) dans la première configuration du circuit de commutation, la troisième phase d'échantillonnage (C2) et la quatrième phase d'échantillonnage (C3) de la première séquence (Seq1), la première phase d'échantillonnage (C0) et la deuxième phase d'échantillonnage (C1) de la deuxième (Seq2) étant effectuées par au moins un circuit de lecture d'au moins un autre pixel de profondeur dudit ensemble.

**7.** Dispositif selon la revendication 5, dans lequel les séquences répétées de phases successives d'échantillonnage comportent une répétition d'une première séquence d'échantillonnage puis une répétition d'une deuxième séquence d'échantillonnage, la première séquence d'échantillonnage et la deuxième séquence d'échantillonnage comportant chacune une succession d'une première phase d'échantillonnage (C0), d'une deuxième phase d'échantillonnage

(C1), d'une troisième phase d'échantillonnage (C2), et d'une quatrième phase d'échantillonnage (C3), la première phase d'échantillonnage, la deuxième phase d'échantillonnage (C1), la troisième phase d'échantillonnage (C2), la quatrième phase d'échantillonnage (C3) ayant des durées égales,

la première phase d'échantillonnage (C0) de la première séquence (Seq1) étant effectuée par le premier pixel, la troisième phase d'échantillonnage (C2) de la deuxième séquence (Seq2) étant effectuée par le premier pixel, la deuxième phase d'échantillonnage, la troisième phase d'échantillonnage (C2) et la quatrième phase d'échantillonnage (C3) de la première séquence (Seq1), la première phase d'échantillonnage (C0), la deuxième phase d'échantillonnage (C1) et la quatrième phase d'échantillonnage (C3) de la deuxième séquence étant effectuées par au moins un circuit de lecture d'au moins un autre pixel de profondeur dudit ensemble.

8. Dispositif selon l'une des revendications précédentes, dans lequel le circuit de lecture du premier pixel ($P_1$, $P_{100}$) comprend en outre un bloc (10) de réinitialisation de polarisation servant à la polarisation du photo-détecteur (PD), avec un interrupteur (11) de repolarisation configuré pour, lors de phases de réinitialisation (RAZ) de polarisation dudit photo-détecteur (PD), coupler le bloc (10) de réinitialisation de polarisation au photo-détecteur (PD) de sorte à lui appliquer un potentiel de polarisation, et pour lors des phases d'échantillonnage effectuées par le premier pixel, découpler le photo-détecteur du bloc (10) de réinitialisation de polarisation.

9. Dispositif selon l'une des revendications précédentes, le circuit de commutation (120) comportant :

- un premier élément interrupteur (111) entre une première électrode (101a) de la capacité d'intégration (Ca) et le nœud de lecture ($N_{L1}$);
- un deuxième élément interrupteur (112) entre une deuxième électrode (102a) de la capacité d'intégration (Ca) et le nœud de détection ($N_D$);
- un troisième élément interrupteur (113) entre la deuxième électrode (102a) de la capacité d'intégration (Ca) et le nœud de détection $N_D$ ;
- un quatrième élément interrupteur (114) entre la première électrode (101a) de la première capacité (Ca) et le nœud de lecture ($N_{L1}$).

10. Dispositif d'acquisition d'images de profondeur d'une scène par détection d'un signal lumineux réfléchi correspondant à la réflexion sur la scène d'un signal lumineux incident, en particulier dans le proche infrarouge, le dispositif d'acquisition étant doté d'un ensemble de pixels de profondeur, chaque pixel de profondeur dudit ensemble comprenant un circuit de lecture associé à un photo-détecteur (PD), le circuit de lecture comportant un nœud de détection ($N_D$) auquel le photo-détecteur (PD) est connecté, le circuit de lecture étant doté :

- d'un élément de mémorisation comportant une première capacité d'intégration (Ca) configurée pour acquérir des échantillons de charges issues du photo-détecteur (PD) lors de phases d'échantillonnage effectuées au cours d'une période d'intégration comportant des séquences répétées de phases successives d'échantillonnage de charges,
- un étage amplificateur comportant en entrée, ledit nœud de détection ($N_D$) couplé au photo-détecteur (PD) et en sortie, un nœud de lecture ($N_{L1}$) apte à être couplé à un dispositif de lecture externe (DLE) et commun audit ensemble de pixels de profondeurs,
- une deuxième capacité d'intégration (Cb),
- un deuxième étage amplificateur, le deuxième étage amplificateur comportant en entrée, le nœud de détection ($N_D$) couplé au photodétecteur (PD) et en sortie, un deuxième nœud de lecture ($N_{L2}$),
au moins un premier pixel ($P_{10}$) dudit ensemble de pixels de profondeur étant doté en outre d'un circuit de commutation (120') comportant des éléments interrupteurs (111, 112, 116, 117 ; 121, 122, 123, 124) et configuré pour :

- lors de phases d'échantillonnage de la capacité (Ca) adopter une première configuration de sorte à coupler une première électrode (101a) de la première capacité d'intégration (Ca) audit nœud de lecture ($N_{L1}$) et une deuxième électrode (102a) de la première capacité d'intégration (Ca) au nœud de détection ($N_D$), puis,
- lors d'autres phases d'échantillonnage de la capacité (Ca) adopter une deuxième configuration de sorte à coupler la première électrode (101a) de la première capacité d'intégration au nœud de détection ($N_D$) et la deuxième électrode (102a) de la première capacité d'intégration au deuxième nœud de lecture ($N_{L2}$) en sortie du deuxième étage amplificateur ($A_2$) dudit circuit de lecture, le deuxième étage amplificateur comportant, en entrée, ledit nœud de détection ($N_D$), et en sortie, le deuxième nœud de lecture ($N_{L2}$), ledit deuxième nœud de lecture étant également apte à être couplé audit dispositif de lecture externe (DLE).

**11.** Dispositif selon la revendication 10, dans lequel pendant lesdites phases d'échantillonnage, la première électrode (101a) de la première capacité d'intégration (Ca) est couplée au nœud de lecture ($N_{L1}$) et la deuxième électrode (102a) de la première capacité d'intégration (Ca) est couplée au nœud de détection ($N_D$), et dans lequel pendant lesdites autres phases d'échantillonnage, la première électrode (101a) de la première capacité d'intégration (Ca) est couplée au nœud de détection ($N_D$) et la deuxième électrode (102a) de la première capacité d'intégration (Ca) au deuxième nœud de lecture ($N_{L2}$),
le circuit de commutation (120') étant configuré pour :

- lors de phases d'échantillonnage de la deuxième capacité d'intégration coupler une première électrode (101b) de la deuxième capacité d'intégration ($C_b$) au deuxième nœud de lecture ($N_{L2}$) et une deuxième électrode (102b) de la deuxième capacité d'intégration (Ca) au nœud de détection ($N_D$), puis
- lors d'autres phases d'échantillonnage de la deuxième capacité d'intégration, coupler la première électrode (101b) de la deuxième capacité d'intégration ($C_b$) au nœud de détection ($N_D$) et la deuxième électrode (102b) de la deuxième capacité d'intégration ($C_b$) au nœud de lecture ($N_{L1}$).

**12.** Dispositif selon la revendication 11, dans lequel les séquences répétées de phases successives d'échantillonnage comportent une première séquence d'échantillonnage puis une deuxième séquence d'échantillonnage, la première séquence d'échantillonnage et la deuxième séquence d'échantillonnage comportant chacune une succession d'une première phase d'échantillonnage (C0), d'une deuxième phase d'échantillonnage (C1), d'une troisième phase d'échantillonnage (C2), et d'une quatrième phase d'échantillonnage (C3), la première phase d'échantillonnage, la deuxième phase d'échantillonnage (C1), la troisième phase d'échantillonnage (C2), la quatrième phase d'échantillonnage (C3) ayant des durées égales,
la première phase d'échantillonnage (C0) et la deuxième phase d'échantillonnage (C1) de la première séquence (Seq1) étant effectuées par la capacité (Ca) du premier pixel, la troisième phase d'échantillonnage (C2) et la quatrième phase d'échantillonnage (C3) de la première séquence (Seq1) étant effectuées par la deuxième capacité (Cb) du premier pixel.

**13.** Dispositif selon la revendication 12, la deuxième phase d'échantillonnage (C1) et la troisième phase d'échantillonnage (C2) de la première séquence étant effectuées par une capacité (Ca) d'un deuxième pixel, la quatrième phase d'échantillonnage (C3) de la première séquence et la première phase d'échantillonnage (C0) de la deuxième séquence étant effectuées par une autre capacité (Cb) du deuxième pixel.

**14.** Dispositif selon l'une des revendications 12 ou 13, le circuit de commutation (120') comportant:

- un élément interrupteur (111) entre la première électrode (101a) de la première capacité (Ca) et le nœud de lecture ($N_{L1}$);
- un élément interrupteur (112) entre la deuxième électrode (102a) de la première capacité (Ca) et le nœud de détection ($N_D$);
- un élément interrupteur (116) entre la première électrode (101b) de la deuxième capacité (Cb) et le nœud de lecture ($N_{L1}$);
- un élément interrupteur (117) entre la deuxième électrode (102b) de la deuxième capacité (Cb) et le nœud de détection ($N_D$);
- un élément interrupteur (121) entre la première électrode (101a) de la première capacité (Ca) et le nœud de détection ($N_D$);
- un élément interrupteur (122) entre la deuxième électrode (102a) de la première capacité (Ca) et le deuxième nœud de lecture ($N_{L2}$);
- un élément interrupteur (123) entre la première électrode (101b) de la deuxième capacité (Cb) et le nœud de détection ($N_D$);
- un élément interrupteur (124) entre la deuxième électrode (102b) de la deuxième capacité (Cb) et le nœud de lecture ($N_{L1}$).

**15.** Dispositif selon l'une des revendications 1 à 14, dans lequel ledit étage amplificateur (A1) est formé :

- d'un premier transistor (M2c) doté d'une grille connectée au photo-détecteur (PD) et d'une électrode, en particulier une électrode de drain, connectée au nœud de lecture
- d'un deuxième transistor (M1c) monté en source de courant et ayant une électrode commune avec le premier transistor (M2c).

**16.** Dispositif selon la revendication 15, dans lequel lesdits pixels de profondeur ont un agencement matriciel, le dispositif comprenant en outre un bloc de polarisation externe (BPE) commun aux pixels de profondeur d'une même rangée, en particulier une rangée horizontale ou une ligne de pixels de profondeur, le bloc de polarisation externe (BPE) comprenant une portion de circuit montée en miroir de courant avec ledit deuxième transistor (M1c).

**17.** Dispositif selon l'une des revendications précédentes, dans lequel le circuit de lecture est muni en outre d'un interrupteur de réinitialisation (8) en parallèle avec ladite branche de rétroaction, prévu pour, lorsqu'il est fermé, réinitialiser la capacité d'intégration (Ca) préalablement à ladite période d'intégration, ledit interrupteur de réinitialisation (8) étant ouvert lors de ladite période d'intégration.

**18.** Dispositif selon l'une des revendications 1 à 17, dans lequel le photo-détecteur est une photodiode non-pincée en particulier à base d'un matériau III-V tel que de l'InGaAs.

FIG. 1

FIG. 2

**int1Ca**  **int1Cb**  **int2Ca**  **int2Cb**

| int1Ca | | int1Cb | | int2Ca | | int2Cb | |
|---|---|---|---|---|---|---|---|
| 113 114 ouverts<br><br>111 112 fermés | | 118 119 ouverts<br><br>116 117 fermés | | 113 114 fermés<br><br>111 112 ouverts | | 118 119 fermés<br><br>116 117 ouverts | | pixel $p_1$
| $C_0$ (21 fermé) | RAZ (10 fermé) | $C_2$ (31 fermé) | RAZ (10 fermé) | $C_0$ (21 fermé) | RAZ (10 fermé) | $C_2$ (31 fermé) | RAZ (10 fermé) |
| | 113 114 ouverts<br><br>111 112 fermés | 118 119 ouverts<br><br>116 117 fermés | | | 113 114 fermés<br><br>111 112 ouverts | 118 119 fermés<br><br>116 117 ouverts | | pixel $p_2$
| $C_1$ (21 fermé) | RAZ (10 fermé) | $C_3$ (31 fermé) | RAZ (10 fermé) | $C_1$ (21 fermé) | RAZ (10 fermé) | $C_3$ (31 fermé) | RAZ (10 fermé) |

Seq 1                               Seq 2

k x Seq 1                           k x Seq 2

# FIG. 3

EP 4 617 717 A1

FIG. 4

Seq' 1  Seq' 2

$C_0$  $C_1$  $C_2$  $C_3$  $C_0$

Premier pixel
C0+C1
C2+C3

TOT1
EC0 + EC1 - EC2 - EC3

Deuxième pixel
C1+C2
C3+C0

TOT2
EC1 + EC2 - EC3 - EC0

(TOT1 + TOT2)
Addition : 2EC1 - 2EC3
Soustation: 2EC0 - 2EC2
(TOT1 - TOT2)

EP 4 617 717 A1

FIG. 5A

EP 4 617 717 A1

FIG. 5B

FIG. 6A

FIG. 6B

FIG. 7

EP 4 617 717 A1

EP 4 617 717 A1

| 113 114 ouverts 111 112 fermés | | | | | 113 114 fermés 111 112 ouverts | | |
|---|---|---|---|---|---|---|---|
| $EC_0$ (21 fermé) | RAZ (10 fermé) | RAZ (10 fermé) | RAZ (10 fermé) | RAZ (10 fermé) | RAZ (10 fermé) | $-EC_2$ (21 fermé) | RAZ (10 fermé) |
| | $EC_1$ (21 fermé) | RAZ (10 fermé) | RAZ (10 fermé) | RAZ (10 fermé) | RAZ (10 fermé) | RAZ (10 fermé) | $-EC_3$ (21 fermé) |

pixel $p_{100}$

pixel $p_{200}$

| $C_0$ | $C_1$ | $C_2$ | $C_3$ | $C_0$ | $C_1$ | $C_2$ | $C_3$ | $C_0$ |
|---|---|---|---|---|---|---|---|---|

Seq 1

Seq 2

k x Seq 1

k x Seq 2

# FIG.8

**Europäisches Patentamt**
**European Patent Office**
**Office européen des brevets**

# RAPPORT DE RECHERCHE EUROPEENNE

Numéro de la demande

EP 25 16 3567

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>A | US 2012/312966 A1 (SUZUKI TAKASHI [JP] ET AL) 13 décembre 2012 (2012-12-13)<br>* abrégé *; figures 1-19 *<br>* alinéa [0001] - alinéa [0019] *<br>* alinéa [0042] - alinéa [0109] *<br>- - - - - | 1,5,8,9,<br>15-17<br>2-4,6,7,<br>10-14 | INV.<br>G01S7/4863<br>G01S17/894<br>G01S7/481<br>G01S7/4914<br>G01S17/36<br>G01S7/4915 |
| A,D | FR 3 138 963 A1 (COMMISSARIAT ENERGIE ATOMIQUE [FR]) 23 février 2024 (2024-02-23)<br>* le document en entier *<br>- - - - - | 1-18 | |
| A,D | Lange Robert: "Solid-State Time-of-Flight Range Camera",<br>IEEE Journal of Quantum electronics,<br>1 mars 2001 (2001-03-01), pages 390-397,<br>XP093241967,<br>Extrait de l'Internet:<br>URL:https://ieeexplore.ieee.org/stampPDF/g etPDF.jsp?tp=&arnumber=910448&ref=aHR0cHM6 Ly9pZWVleHBsb3JlLmllZWUub3JnL2Fic3RyYWN0L2 RvY3VtZW50LzkxMDQ0OA==<br>[extrait le 2025-01-22]<br>* le document en entier *<br>- - - - - | 1-18 | |

**DOMAINES TECHNIQUES RECHERCHES (IPC)**

G01S

Le présent rapport a été établi pour toutes les revendications

| Lieu de la recherche | Date d'achèvement de la recherche | Examinateur |
|---|---|---|
| Munich | 21 juillet 2025 | Zaneboni, Thomas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 16 3567

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-07-2025

| Document brevet cité au rapport de recherche | Date de publication | Membre(s) de la famille de brevet(s) | Date de publication |
|---|---|---|---|
| US 2012312966    A1 | 13-12-2012 | EP       2541275 A1 | 02-01-2013 |
|  |  | JP       5302244 B2 | 02-10-2013 |
|  |  | JP    2011179926 A | 15-09-2011 |
|  |  | KR   20130045833 A | 06-05-2013 |
|  |  | US    2012312966 A1 | 13-12-2012 |
|  |  | WO    2011105438 A1 | 01-09-2011 |
| FR 3138963      A1 | 23-02-2024 | AUCUN |  |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2208374

**Littérature non-brevet citée dans la description**

- **R. LANGE** ; **P. SEITZ**. Solid-state TOF range camera. *IEEE J. on Quantum Electronics*, March 2001, vol. 37 (3)